# FASCICULE DE BREVET EUROPEEN

(11) **EP 2 923 904 B1**
(45) Date de publication et mention de la délivrance du brevet: **08.05.2019**
(21) Numéro de dépôt: 15157553.7
(22) Date de dépôt: 04.03.2015
(51) Int. Cl.: B60T 8/17

(54) **SYSTÈME DE FREINAGE POUR UNE VOITURE MOTORISÉE DE VÉHICULE FERROVIAIRE**
BREMSSYSTEM FÜR EINEN MOTORISIERTEN WAGEN EINES SCHIENENFAHRZEUGS
BRAKING SYSTEM FOR A SELF-PROPELLED RAILWAY CAR

(30) Priorité: 28.03.2014 FR 1452756
(43) Date de publication de la demande: 30.09.2015
(73) Titulaire: ALSTOM Transport Technologies, 93400 Saint-Ouen (FR)
(72) Inventeur: Brisou, Florent, 17540 FONTPATOUR DE VERINES (FR); Bernard, Eric, 17440 AYTRE (FR)
(74) Mandataire: Lavoix

(56) Documents cités:
- GB-A- 2 402 983
- US-A1- 2007 001 629
- US-A1- 2013 261 924

## Description

La présente invention concerne un système de freinage pour une voiture motorisée de véhicule ferroviaire.

Une telle voiture motorisée est destinée à circuler sur des rails, et comporte classiquement des roues en contact avec ces rails.

Le système de freinage comporte habituellement un dispositif de gestion de l'adhérence des roues de la voiture motorisée sur les rails, au cours d'un freinage. Un tel dispositif de gestion d'adhérence est généralement connu sous la dénomination « WSP » (acronyme anglais pour « Wheel Slide Protection »).

Le dispositif de gestion est destiné à protéger les roues contre des dommages liés au glissement de ces roues sur les rails, mais aussi d'optimiser l'effort de freinage en fonction de l'adhérence afin d'obtenir la meilleure performance possible en conditions d'adhérence dégradée. A cet effet, le dispositif de gestion WSP est généralement propre à réguler la vitesse des roues de manière contrôlée, pour conserver un niveau constant de glissement des roues sur les rails, et optimiser ainsi l'effort de freinage.

Le brevet GB2402983 divulgue un système de freinage pour un véhicule ferroviaire, dans lequel les essieux du véhicule sont équipés de capteurs de vitesse d'essieu. La sortie du capteur de vitesse d'essieu est fournie à un processeur de données qui est doté d'une intelligence locale afin de permettre un contrôle individuel de la pression de freinage sur chaque essieu ou, alternativement, sur chaque bogie ou voiture. Le processeur de données communique, en utilisation, avec une unité de commande de frein via un bus de données 18, les sorties de capteur étant traitées de sorte que les données puissent être communiquées au processeur de données 7 et aux autres processeurs de données 17 sorties de capteur sur d'autres essieux ou bogies. Un autre bus de données assure la redondance.

Dans le cas d'une voiture motorisée, le dispositif de gestion WSP communique des instructions de contrôle de force de freinage à un dispositif de contrôle de traction, généralement connu sous la dénomination TCE (acronyme anglais pour Traction Control Electronic). Ce dispositif de contrôle de traction régule la force de freinage en fonction des instructions de contrôle de force de freinage transmises par le dispositif de gestion WSP.

Habituellement, la liaison entre le dispositif de gestion WSP et le dispositif de contrôle TCE est de type analogique. Une telle liaison est relativement complexe.

En outre, une telle liaison présente généralement une structure spécifique au dispositif de gestion WSP ou au dispositif de contrôle TCE. Ainsi, dans le cas où l'on souhaite remplacer le dispositif de gestion WSP d'un système de freinage existant par un dispositif de gestion d'un autre fournisseur, il est nécessaire de reconfigurer le système de freinage, et notamment reconfigurer le dispositif de contrôle de traction TCE.

L'invention a notamment pour but de remédier à ces inconvénients, en fournissant un système de freinage pour une voiture motorisée de véhicule ferroviaire, dont la liaison entre le dispositif de gestion WSP et le dispositif de contrôle TCE est simplifiée et standardisée.

A cet effet, l'invention a notamment pour objet un système de freinage selon la revendication 1.

De manière optionnelle, le dispositif de gestion transmet des instructions de correction de freinage en continu, ces instructions variant au cours du temps en fonction de la variation des informations de détection de glissement.

Selon un second aspect, l'invention porte sur une voiture motorisée de véhicule ferroviaire, munie de roues et destinée à circuler sur des rails, caractérisée en ce qu'elle comporte un système de freinage ayant les caractéristiques ci-dessus.

L'invention concerne également une voiture motorisée de véhicule ferroviaire, caractérisée en ce qu'elle comporte un système de freinage tel que défini précédemment.

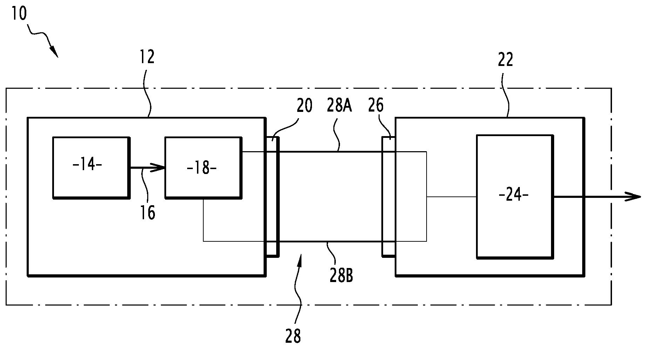

L'invention sera mieux comprise à la lecture de la description qui va suivre, donnée uniquement à titre d'exemple et faite en se référant à la figure unique annexée, représentant schématiquement un système de freinage selon un exemple de mode de réalisation de l'invention.

On a représenté, sur la figure unique, un système de freinage pour une voiture motorisée de véhicule ferroviaire. Le système de freinage est désigné par la référence générale 10.

Le système de freinage 10 est destiné à équiper une voiture motorisée de véhicule ferroviaire, c'est-à-dire une voiture comportant au moins un bogie motorisé. Ce bogie comporte de manière classique au moins un essieu muni de roues, lesdites roues étant destinées à circuler sur des rails de voie ferroviaire.

Le système de freinage 10 comporte un dispositif 12 de gestion de l'adhérence desdites roues sur lesdits rails (WSP), lors d'un freinage.

Le dispositif de gestion 12 comporte de manière classique des moyens 14 de détection de glissement entre les roues et les rails, propres à fournir des informations 16 de détection de glissement.

De tels moyens de détection de glissement sont connus en soi. Ils comportent par exemple des capteurs de mesure de la vitesse des essieux de la voiture motorisée, des moyens de calcul de la vitesse tangentielle des roues, et des moyens de mesure ou de calcul de la vitesse de la voiture. Ainsi, un glissement est par exemple détecté lorsque la vitesse tangentielle des roues est inférieure à la vitesse de la voiture. Le dispositif de gestion 12 comporte également, en combinaison avec les moyens précédemment décrits, des moyens de calcul de décélération, de variation de décélération, et/ou tout autre moyen permettant de quantifier le glissement des roues sur les rails.

Le dispositif de gestion 12 comporte par ailleurs des moyens 18 de détermination d'instructions de contrôle, ou de correction, de force de freinage en fonction des informations de détection de glissement 16. De tels moyens de détermination 18, bien connus en soi, sont destinés à déterminer quelles variations il est nécessaire d'appliquer au freinage pour remédier à un glissement détecté.

Le dispositif de gestion 12 comporte enfin une première interface 20, propre à transmettre les instructions de correction de force de freinage déterminées par les moyens de détermination 18.

Le système de freinage 10 comporte par ailleurs un dispositif 22 de contrôle de traction (TCE). Ce dispositif de contrôle 22 comporte de manière classique des moyens de variation d'une force de freinage des roues 24, en fonction des instructions de correction de freinage. Ainsi, le dispositif de contrôle 22 pilote notamment des moyens de freinage des roues.

Ainsi, les moyens de détermination 18 transmettent les corrections de force de freinage aux moyens de variation 24 par l'intermédiaire des instructions de correction.

De manière connue en soi, les instructions de correction peuvent prendre trois états différents, en fonction de la variation à appliquer pour réduire le glissement entre des roues sur les rails.

Ces trois états sont : un premier état d'augmentation de la force de freinage, un deuxième état de diminution de la force de freinage, et un troisième état de maintien de la force de freinage.

Ainsi, en fonction du glissement détecté par les moyens de détection 14, les moyens de détermination 18 déterminent, de manière connue en soi, quel état devra prendre les instructions de correction. Les moyens de détermination 18 transmettent ensuite les instructions de correction de force de freinage, pour que les moyens de variation 24 appliquent la force de freinage souhaitée en fonction de ces instructions de correction de freinage.

Le dispositif de contrôle 22 comporte une seconde interface 26, propre à recevoir les instructions de correction de force de freinage, et à les transmettre aux moyen de variation 24. Avantageusement, le dispositif de contrôle de traction 22 est informatisé, et comporte un algorithme pour le traitement des instructions de correction de force de freinage reçues.

Conformément à l'invention, le système de freinage 10 comporte une liaison 28 de type digital entre les première 20 et seconde 26 interfaces, propre à transmettre les instructions de correction de force de freinage entre ces première 20 et seconde 26 interfaces, sous forme d'informations digitales. Ainsi, les première 20 et seconde 26 interfaces sont de type digital.

Plus particulièrement, la liaison digitale 28 transmet au moins des première et seconde informations digitales sous forme binaire, en fonction des informations de détection de glissement.

Par exemple, la liaison digitale 28 comporte deux voies 28A, 28B, transmettant chacune une information digitale respective sous forme binaire.

Le système de freinage 10 est configuré pour que ces deux informations digitales binaires suffisent à déterminer dans quel état doivent passer les moyens de variation 24. Par exemple, les moyens de variation 24 agissent sur la force de freinage en suivant la relation ci-dessous :
- lorsque les première et seconde informations digitales sont toutes deux égales à une même première valeur choisie parmi 0 et 1 (par exemple sont toutes deux égales à 0), les moyens de variation 24 passent dans le premier état d'augmentation de la force de freinage ;
- lorsque les première et seconde informations digitales sont toutes deux égales à une même seconde valeur, différente de la première valeur, choisie parmi 0 et 1 (par exemple sont toutes deux égales à 1), les moyens de variation 24 passent dans le second état de diminution de la force de freinage ; et
- lorsque les première et seconde informations digitales sont respectivement égales à des valeurs différentes choisies parmi 0 et 1 (par exemple la première information digitale est égale à 1 et la seconde information digitale est égale à 0), les moyens de variation 24 passent dans le troisième état de maintien de la force de freinage.
- en variante, lorsque la première information digitale est égale à 1 et la seconde information digitale est égale à 0, les moyens de variation 24 passent dans le troisième état de maintien de la force de freinage, et lorsque la première information digitale est égale à 0 et la seconde information digitale est égale à 1, les moyens de variation 24 détectent une configuration interdite et déclare une erreur.

Les moyens de détermination 18 ne maintiennent les moyens de variation 24 dans le premier état que si la force de freinage est inférieure à une valeur de consigne déterminée. Cette valeur de consigne est fixée par le dispositif de gestion du freinage du véhicule, de manière connue en soit, et reçue par le dispositif de gestion 12.

L'état de ces informations digitales sont toutes deux surveillées en permanence par les moyens de détermination 18 et moyens de variation 24 afin d'éviter un état de diminution permanent de la force de freinage susceptible de détériorer les performances du système de freinage 10.

Ainsi, les moyens de détermination 18 déterminent les valeurs des première et seconde informations digitales en fonction de l'état choisi pour les moyens de variation 24 afin de remédier au glissement détecté.

Avantageusement, le dispositif de gestion 12 transmet des instructions de correction de freinage en continu, ces instructions variant au cours du temps en fonction de la variation des informations de détection de glissement. Ainsi, les moyens de variation 24 changent d'état de manière dynamique, jusqu'à obtenir un niveau de glissement souhaité.

Il apparaît clairement que la liaison entre le dispositif de gestion 12 et le dispositif de contrôle 22 présente une structure simple qui peut être aisément standardisée.

On notera que l'invention n'est pas limitée au mode de réalisation précédemment décrit, mais pourrait présenter diverses variantes sans sortir du cadre des revendications.

En particulier, les instructions de correction de force de freinage pourraient être transmises à travers une unique voie transportant les deux informations digitales à la fois.

## Revendications

1. Système de freinage (10) pour une voiture motorisée de véhicule ferroviaire, comportant :
- un dispositif (12) de gestion de l'adhérence de roues de la voiture et des rails, au cours d'un freinage, comprenant :
• des moyens (14) de détection de glissement entre lesdites roues et lesdits rails, fournissant des informations (16) de détection de glissement,
• des moyens (18) de détermination d'instructions de correction de force de freinage en fonction des informations de détection de glissement (16), et
• une première interface (20) propre à transmettre les instructions de correction de force de freinage,
- un dispositif de contrôle de traction (22), comprenant :
• une seconde interface (26), propre à recevoir les instructions de correction de force de freinage, et
• des moyens (24) de variation d'une force de freinage des roues, en fonction des instructions de correction de freinage,
dans lequel les première (20) et seconde (26) interfaces sont de type digital, le système de freinage (10) comportant une liaison digitale (28) entre les première (20) et seconde (26) interfaces, propre à transmettre les instructions de correction de force de freinage entre ces première (20) et seconde (26) interfaces, sous forme d'informations digitales, la liaison digitale (28) transmettant au moins des première et seconde informations digitales sous forme binaire,
et **caractérisé en ce que** les moyens de détermination (18) établissent les valeurs binaires des première et seconde informations digitales en fonction des informations de détection de glissement (16), et les moyens de variation (24) agissent sur la force de freinage en suivant la relation ci-dessous :
- lorsque les première et seconde informations digitales sont toutes deux égales à une même première valeur choisie parmi 0 et 1, les moyens de variation (24) augmentent la force de freinage,
- lorsque les première et seconde informations digitales sont toutes deux égales à une même seconde valeur, différente de la première valeur, choisie parmi 0 et 1, les moyens de variation (24) diminuent la force de freinage, et
- lorsque les première et seconde informations digitales sont respectivement égales à des valeurs distinctes choisies parmi 0 et 1, les moyens de variation (24) maintiennent la force de freinage.

2. Système de freinage (10) selon la revendication 1, dans lequel le dispositif de gestion (12) transmet des instructions de correction de freinage en continu, ces instructions variant au cours du temps en fonction de la variation des informations de détection de glissement.

3. Voiture motorisée de véhicule ferroviaire, munie de roues et destinée à circuler sur des rails, **caractérisée en ce qu'**elle comporte un système de freinage (10) selon l'une quelconque des revendications précédentes.

## Patentansprüche

1. Bremssystem (10) für einen motorisierten Wagen eines Schienenfahrzeugs, umfassend:
- eine Vorrichtung (12) zum Verwalten der Haftung der Räder des Wagens und der Schienen während eines Bremsens, die umfasst:
• Mittel (14) zum Detektieren eines Schlupfes zwischen den Rädern und den Schienen, die Informationen (16) zur Detektion des Schlupfes liefern,
• Mittel (18) zum Bestimmen von Korrekturinstruktionen der Bremskraft abhängig von den Informationen (16) der Detektion des Schlupfes, und
• eine erste Schnittstelle (20), die geeignet ist, die Korrekturinstruktionen der Bremskraft zu übertragen,
- eine Vorrichtung zur Überwachung der Traktion (22), umfassend:
• eine zweite Schnittstelle (26), die geeignet ist, die Korrekturinstruktionen der Bremskraft zu empfangen, und
• Mittel (24) zum Verändern der Bremskraft der Räder abhängig von den Korrekturinstruktionen der Bremskraft,
bei dem die erste (20) und zweite (26) Schnittstelle digitaler Art sind, das Bremssystem (10) eine digitale Verbindung (28) zwischen der ersten (20) und zweiten (26) Schnittstelle aufweist, die geeignet ist, die Korrekturinstruktionen der Bremskraft zwischen dieser ersten (20) und zweiten (26) Schnittstelle in Form von digitalen Informationen zu übertragen, wobei die digitale Verbindung (28) mindestens erste und zweite digitale Informationen binärer Form überträgt, und
**dadurch gekennzeichnet, dass**
die Mittel (18) zum Bestimmen binäre Werte der ersten und zweiten digitalen Informationen abhängig von den Informationen des Detektierens des Schlupfes (16) aufstellen und die Mittel (24) zum Verändern auf die Bremskraft wirken, indem die folgende Beziehung verfolgt wird:
- wenn die ersten und zweiten digitalen Informationen beide gleich einem selben ersten Wert, ausgewählt aus 0 und 1, sind, die Mittel (24) zum Verändern die Bremskraft erhöhen,
- wenn die ersten und zweiten digitalen Informationen beide gleich einem selben zweiten Wert, unterschiedlich zum ersten Wert, sind, ausgewählt aus 0 und 1, die Mittel (24) zum Verändern die Bremskraft verringern, und
- wenn die ersten und zweiten digitalen Informationen jeweils gleich unterschiedlichen Werten, ausgewählt aus 0 und 1 sind, die Mittel (24) zum Verändern die Bremskraft aufrechterhalten.

2. Bremssystem (10) nach Anspruch 1, bei dem die Verwaltungsvorrichtung (12) die Korrekturinstruktionen des Bremsens kontinuierlich überträgt, wobei diese Instruktionen zeitlich abhängig von der Änderung der Informationen der Detektion des Schlupfes sind.

3. Motorisierter Wagen eines Schienenfahrzeugs, das mit Rädern ausgerüstet ist und vorgesehen ist, auf Schienen zu fahren, **dadurch gekennzeichnet, dass** er ein Bremssystem (10) nach einem beliebigen der vorhergehenden Ansprüche aufweist.

## Claims

1. Braking system (10) for a motorized car of a railway vehicle, comprising:
- a device (12) for managing the grip of wheels of the car and of the rails, during braking, comprising:
• means (14) for detecting slip between said wheels and said rails, supplying slip detection information (16),
• means (18) for determining braking force correction instructions as a function of the slip detection information (16), and
• a first interface (20) specifically for transmitting the braking force correction instructions,
- a traction control device (22), comprising:
• a second interface (26), specifically for receiving the braking force correction instructions, and
• means (24) for varying a wheel braking force, as a function of the braking correction instructions, wherein the first (20) and second (26) interfaces are of digital type, the braking system (10) comprising a digital link (28) between the first (20) and second (26) interfaces, specifically for transmitting the braking force correction instructions between these first (20) and second (26) interfaces, in the form of digital information, the digital link (28) transmitting at least first and second digital information items in binary form,
and **characterized**
**in that** the determination means (18) establish the binary values of the first and second digital information items as a function of the slip detection information (16), and the variation means (24) act on the braking force according to the relationship below:
- when the first and second digital information items are both equal to a same first value chosen from zero and one, the variation means (24) increase the braking force,
- when the first and second digital information items are both equal to a same second value, different from the first value, chosen from zero and one, the variation means (24) reduce the braking force, and
- when the first and second digital information items are respectively equal to distinct values chosen from zero and one, the variation means (24) maintain the braking force.

2. Braking system (10) according to Claim 1, wherein the management device (12) transmits braking correction instructions continuously, these instructions varying over time as a function of the variation of the slip detection information.

3. Motorized car of railway vehicle, provided with wheels and intended to travel on rails, **characterized in that** it comprises a braking system (10) according to either one of the preceding claims.
